# FASCICULE DE BREVET EUROPEEN

(11) **EP 0 586 766 B1**
(45) Date de publication et mention de la délivrance du brevet: **30.03.1994**
(21) Numéro de dépôt: 92440114.4
(22) Date de dépôt: 14.10.1992
(51) Int. Cl.: F16C 29/06

(54) **Perfectionnement aux rails supports d'arbres et analogues**
Tragschienen für Wellen und ähnliches
Rod supports and the like

(43) Date de publication de la demande: 16.03.1994
(73) Titulaire: INA TECHNIQUES LINEAIRES, 67501 Haguenau Cédex (FR)
(72) Inventeur: Gaupp, Daniel, F-67320 Uhlwiller (FR); Jaeger, Jean-Marc, F-67500 Haguenau (FR)
(74) Mandataire: Bossard, Jacques-René

(56) Documents cités:
- DE-A- 2 242 446
- FR-A- 2 352 208
- US-A- 4 496 197
- US-A- 4 637 738
- US-A- 4 753 540
- SKF PRODUKTINFORMATION 109/I 1981, 'Linearkugellager', page 34

## Description

La présente invention concerne, d'une manière générale, les rails extrudés en alliage d'aluminium utilisés pour supporter des arbres destinés, en combinaison avec des douilles à billes, à assurer le guidage linéaire de modules ou tables mobiles de haute précision (SKF PRODUKT INFORMATION 109/I 1981 "Linear-Kugellager").

Elle vise plus particulièrement ceux de ces rails dont la section droite se présente sous forme d'un corps d'allure verticale comportant sur sa face supérieure une entaille concave longitudinale destinée à supporter un arbre le long de deux génératrices et de chaque coté de sa base deux ailes longitudinales symétriques, servant au repos ou à la fixation du rail sur un bâti.

Compte-tenu de la précision du matériel en cause, les tolérances exigées sont très fines, de l'ordre de ± 0,02 mm sur la distance de l'axe de l'arbre supporté à la face inférieure de la semelle formée par les ailes.

Malheureusement, le processus d'extrusion a pour conséquence qu'à partir d'une certaine longueur, les ailes tendent à se déformer pour prendre une flèche, négative ou positive, non maîtrisable.

Il en résulte que la technique actuelle de fabrication de ces rails implique leur extrusion avec une légère surépaisseur et un usinage par fraisage aussi bien de l'entaille que de la semelle pour pouvoir garantir ladite tolérance, ce qui grève le prix de revient de ces rails et en limite la longueur.

L'invention élimine ces inconvénients, en permettant de fabriquer par extrusion du même métal des rails de ce type ayant une longueur pratiquement illimitée et respectant les tolérances imposées sans exiger d'usinage ultérieur.

A cet effet, selon l'invention, on donne à la semelle précitée une forme telle qu'elle ne repose plus sur le bâti que par la surface d'appui minimum possible. Pratiquement, pour parvenir à cette caractéristique, le bord extérieur des ailes est rehaussé pour ne laisser subsister au contact du bâti que deux surfaces longitudinales très étroites de telle manière que la forme des ailes obtenue lors de l'extrusion n'influe pas sur la tolérance exigée.

On peut donc, grâce à ce profil, supprimer les phases d'usinage de la semelle et de l'entaille, au profit d'un rail fini en extrusion avec la précision voulue, et cela quelle que soit la longueur de ce rail.

Il convient de noter que dans ce type de matériel, à savoir notamment les tables linéaires, mobiles sur des surfaces horizontales, on a déjà proposé d'améliorer la précision de l'assise en planéité en réduisant la surface de contact. Toutefois, il ne s'agissait là que d'une réduction partielle affectant la zone centrale de la table, sans influencer sur la précision de la hauteur de la table sur sa surface d'appui.

Au contraire, dans la présente invention, l'objectif à atteindre étant d'assurer cette précision dans la distance de l'axe de l'arbre du bâti, il est prévu de porter au maximum possible cette réduction de la surface de contact du rail avec ce bâti.

L'invention va maintenant être illustrée avec référence au dessin annexé sur lequel :
La figure 1 illustre un rail support d'arbre du type visé par l'invention, dans sa forme actuelle, et
La figure 2 illustre un mode de réalisation du rail perfectionné selon l'invention.

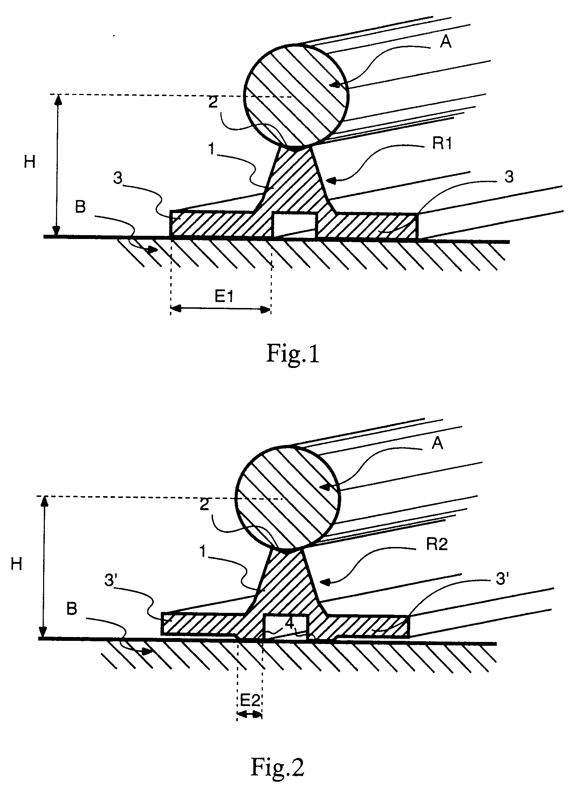

En se référant d'abord à la figure 1, on voit qu'un rail R₁, destiné à supporter un arbre A, repose sur un bâti B, auquel il peut être fixé par exemple par des vis (non représentées).

Ce rail, dans sa forme actuelle R₁ , comporte un corps vertical 1, dans la face supérieure duquel est pratiquée une encoche longitudinale en V, 2, et présentant à sa base un couple d'ailes horizontales 3, chaque aile prenant appui sur le bâti B par la totalité de sa surface E₁.

Les systèmes de guidage linéaire auxquels est associé un arbre tel que A imposent de très fines tolérances, la distance H entre la semelle des ailes 3 et l'axe de l'arbre A étant mesurés à ± 0,02 mm près.

Actuellement, pour respecter cette précision, il est nécessaire d'usiner après extrusion aussi bien ladite semelle que l'encoche 2.

La forme du rail R₂ illustrée à la figure 2 permet d'éliminer cette double opération.

A cet effet, les ailes 3' sont rehaussées au-dessus du bâti B, à l'exception d'une zone très étroite 4, de sorte que le rail ne prend appui sur le bâti que par deux surfaces très étroites E₂, auxquelles on donne la surface minimum possible.

Compte-tenu de cette conformation, la cote H est conservée avec la tolérance voulue, quelles que soient les déformations éventuelles des ailes 3', résultant soit du processus d'extrusion, soit de contraintes ultérieures, par exemple le serrage de vis de fixation sur le bâti.

Le degré et la forme dont les bords extérieurs des ailes 3' sont relevés ne sont pas critiques, l'invention portant exclusivement sur le maintien d'une surface d'appui E₂ minimale.

Ainsi, le rehaussement des ailes peut résulter d'une échancrure de la base des ailes ayant une section quelconque, pourvu qu'elle assure l'absence de contact des ailes avec le bâti, à l'exception des zones minimales E₂ , qui à la limite, peuvent être linéaires.

L'invention s'applique à tous les rails de ce type, quelle que soit leur application dans le domaine du guidage linéaire, par exemple le guidage de modules, tables linéaires ou analogues, et avec une section de l'entaille 2 quelconque, à savoir en V, en U ou autre, pourvu que, également dans un but de précision, l'arbre A ne repose sur le rail que le long de deux génératrices linéaires. La face supérieure du corps 1 pourrait même ne pas comporter d'entaille du tout, dans certaines applications, par exemple si ce corps 1 constitue une cale de rehaussement dont la face supérieure est bombée.

## Revendications

1. Rail extrudé en alliage d'aluminium utilisé pour supporter un arbre destiné à un système de guidage linéaire, du type formé par un corps d'allure verticale comportant sur sa face supérieure une entaille longitudinale pour recevoir ledit arbre le long de deux génératrices, et à sa base un couple d'ailes longitudinales symétriques pour reposer sur un bâti fixe,
caractérisé en ce que lesdites ailes sont conformées de manière à ne prendre appui sur le bâti que par des surfaces minimales possibles.

2. Rail selon la revendication 1, caractérisé en ce que, dans le but de permettre à chaque aile de ne prendre appui sur le bâti que par la surface minimale possible, la zone extérieure de chacune desdites ailes est rehaussée au-dessus de la surface du bâti, pour ne laisser subsister en appui pour chaque aile qu'une très étroite bande centrale située dans sa zone intérieure.

3. Rail selon la revendication 2, caractérisé en ce que chacune des deux bandes centrales étroites correspondant aux deux ailes est linéaire.

4. Rail selon l'une des revendications 1 et 3, caractérisé en ce qu'il est extrudé en longueurs illimitées, aux cotes et tolérances définitives, sans exiger aucun usinage ultérieur.

5. Application du rail selon l'une quelconque des revendications 1 à 4, au support de tout composant linéaire, tel que modules, tables linéaires et analogues.

6. Application selon la revendication 5 à une cale de rehaussement à face supérieure bombée.

## Patentansprüche

1. Stranggepreßte Schiene aus einer Aluminiumlegierung, die dazu verwendet wird, eine für ein geradliniges Führungssystem bestimmte Welle zu unterstützen, und von einem Typ ist, der aus einem Körper mit vertikalem Verlauf gebildet ist und an seiner Oberseite in Längsrichtung eine Eintiefung für die Aufnahme der Welle entlang zweier Erzeugender sowie an seiner Grundfläche ein Paar von symmetrischen, länglichen Flügeln aufweist, um auf einem festen Rahmen aufzuliegen,
dadurch gekennzeichnet, daß die Flügel so gestaltet sind, daß sie sich auf dem Rahmen nur mittels Flächen abstützen, die so klein wie möglich sind.

2. Schiene gemäß Anspruch 1, dadurch gekennzeichnet, daß im Hinblick darauf, daß sich jeder Flügel auf dem Rahmen nur mittels einer Fläche abstützen kann, die so klein wie möglich ist, die äußere Zone eines jeden der Flügel über der Fläche des Rahmens erhöht ist, damit für die Abstützung bei jedem Flügel nur ein sehr schmales zentrales Band übrig bleibt, das sich in der inneren Zone befindet.

3. Schiene gemäß Anspruch 2, dadurch gekennzeichnet, daß jedes der beiden schmalen, zentralen Bänder, die den beiden Flügeln entsprechen, geradlinig ist.

4. Schiene gemäß einem der Ansprüche 1 und 3, dadurch gekennzeichnet, daß sie innerhalb festgelegter Maße und Toleranzen mit unbegrenzten Längen stranggepreßt wird, ohne daß eine nachträgliche Bearbeitung erforderlich ist.

5. Anwendung der Schiene gemäß einem der Ansprüche 1 bis 4 auf den Träger eines beliebigen geradlinigen Bauteils wie etwa Modulen, geraden Tischen und ähnliches.

6. Anwendung gemäß Anspruch 5 auf einen Aufsatzkeil mit bauchiger Oberseite.

## Claims

1. Extruded rail in aluminium alloy used to support a shaft intended for a linear guidance system, of the type formed by a vertical body with a longitudinal slot on its upper surface to accommodate the aforementioned shaft running between two generators, and with a pair of symmetrical longitudinal flanges at its base to rest on a fixed bed,
with the characteristic that the aforementioned flanges meet requirements in that only the smallest possible surface area rests on the bed.

2. Rail as per Claim 1, with the characteristic that, so as to ensure that only the smallest possible surface area of each flange rests on the bed, the outer area of each of these flanges is raised above the surface of the bed such that only a very narrow, central strip in the inner area of each flange remains resting on this.

3. Rail as per Claim 2, with the characteristic that each of the two narrow, central bands corresponding to the two flanges is linear.

4. Rail as per one of Claims 1 and 3, with the characteristic that it is extruded in unrestricted lengths with definitive dimensions and tolerances, and requires no subsequent machining.

5. Application of the rail as per any one of Claims 1 to 4, to support all linear components, such as modules, linear and analogous tables.

6. Application as per Claim 5 with a raising block having a convex upper surface.
